# EUROPÄISCHE PATENTSCHRIFT

(11) **EP 4 006 498 B1**
(45) Veröffentlichungstag und Bekanntmachung des Hinweises auf die Patenterteilung: **22.11.2023**
(21) Anmeldenummer: 20210501.1
(22) Anmeldetag: 28.11.2020
(51) Int. Cl.: G01D 21/00, G05B 19/02

(54) **INBETRIEBNAHME UND WARTUNG VON SENSOR UND MESSUMFORMER**
START-UP AND MAINTENANCE OF SENSOR AND MEASURING TRANSDUCER
MISE EN SERVICE ET MAINTENANCE D'UN CAPTEUR ET D'UN TRANSDUCTEUR DE MESURAGE

(43) Veröffentlichungstag der Anmeldung: 01.06.2022
(73) Patentinhaber: Siemens Aktiengesellschaft, 80333 München (DE)
(72) Erfinder: Hilsendegen, Markus, 76187 Karlsruhe (DE); Probst, René, 76149 Karlsruhe (DE)
(74) Vertreter: Siemens Patent Attorneys

(56) Entgegenhaltungen:
- EP-A1- 3 336 633
- DE-A1-102012 112 427
- DE-U1-202012 102 138

## Beschreibung

Die Erfindung betrifft ein Verfahren. Außerdem betrifft die Erfindung ein mobiles Datenverarbeitungsgerät, insbesondere ein Smartphone oder ein Tablet, und ein Computerprogrammprodukt.

Ein Sensor und ein Messumformer, die zusammenarbeiten sollen, müssen miteinander bekannt gemacht und entsprechend aufeinander abgestimmt, d.h. konfiguriert werden. Es ist bekannt, den Sensor und den dazugehörigen Messumformer von Hand bzw. händisch zu konfigurieren. Dabei müssen die dazugehörigen Sensorinformationen (wie ein Typ, eine bestimmte Schaltungsart etc.) zuerst manuell herausgesucht und danach in dem Messumformer hinterlegt werden. Die Sensorinformationen mussten bislang anhand von Lieferpapieren, Katalogen oder sonstigen Dokumentationen mühsam von Hand ermittelt werden. Die Sensorinformationen wurden dann bislang in ein Konfigurationstool übertragen und anschließend in den Messumformer geschrieben.

Bei der Kalibrierung wurden zusätzliche Parameter in den Messumformer geschrieben. Bei Nachkalibrierungen wurden die Kalibrierdaten oft separat abgelegt und in der Regel nicht für eine Lebenszeitvorhersage genutzt. Wenn in kritischen Fällen eine solche Analyse durchgeführt wurde, konnte diese nur mit Mühe und großer Expertise durchgeführt werden.

Insbesondere bei Kalibrierungen kann die dabei verwendete Datenmenge sehr groß sein. Hierdurch kann es zu einem großen Zeitaufwand kommen. Zudem besteht die Gefahr eines Fehlers, der ggf. zu großen Schäden führen kann. Ein weiterer Nachteil liegt darin, dass bei Kalibrierungen und Wartungen im Lebenszyklus die Arbeiten und Kalibrierdaten oft nicht zuverlässig dokumentiert werden. Somit ist eine Ableitung des Sensorzustandes wegen der so mangelhaften Datenlage schwierig oder gar überhaupt nicht möglich.

In der DE 10 2013 013 299 A1 sind ein Feldgerät mit einem Feldgerät-Transceiver und ein mobiles Bediengerät offenbart. Dabei ist das Bediengerät dazu ausgestaltet, eine den Feldgerät-Transceiver eindeutig identifizierende Identifikationsinformation sowie Bediendaten über eine Funkverbindung an ein übergeordnetes Datenverarbeitungssystem zu übermitteln. Das übergeordnete Datenverarbeitungssystem ist dabei dazu ausgestaltet, anhand der Identifikationsinformation und der Bediendaten das Feldgerät zu bedienen.

Aus der Offenlegungsschrift DE 10 2012 112 427 A1 ist ein Verfahren zum Betreiben eines Feldgeräts bekannt, bei dem eine Betriebssoftware des Feldgeräts auf einer übergeordneten Rechnereinheit betrieben wird und bei einer Inbetriebnahme des Feldgeräts in die übergeordnete Rechnereinheit übertragen wird.

Die Europäische Patentanmeldung EP 3 336 633 A1 offenbart ein Verfahren zum Betreiben eines Messumformers, bei dem ein Betriebssystem des Messumformers gestartet wird, das eine Schnittstelle bereitstellt. Weiter wird im Betriebsverfahren ein Interpreter gestartet, der auf die Schnittstelle zugreift und in dem eine Erweiterung ausgeführt wird. Der Interpreter ist als Software-Emulator ausgebildet.

Des Weiteren ist aus der Druckschrift DE 20 2012 102 138 U1 eine Anordnung zum Auslesen von Identifikationsinformationen eines Feldgeräts bekannt, zu der eine tragbare Ausleseeinheit gehört. Dem Feldgerät ist eine lesbare Identifizierung zugeordnet, die als QR-Code oder als DataMatrix-Code ausgebildet sein kann.

Der Erfindung liegt die Aufgabe zugrunde, ein Verfahren und ein dazugehöriges mobiles Datenverarbeitungsgerät anzugeben, die eine deutlich effizientere Inbetriebnahme eines Sensors und eines dazugehörigen Messumformers ermöglichen.

Diese Aufgabe wird gelöst durch ein Verfahren mit den Merkmalen des Anspruchs 1. Außerdem wird die Aufgabe gelöst durch ein mobiles Datenverarbeitungsgerät gemäß Anspruch 8 und ein Computerprogrammprodukt gemäß Anspruch 9. Vorteilhafte Weiterbildungen ergeben sich aus den abhängigen Ansprüchen.

Ein erfindungsgemäßes Verfahren weist die folgenden Schritte auf:
a) Erfassen einer Identität eines Sensors und eines Messumformers;
b) Anhand der zuvor erfassten Identitäten Abrufen von Informationen von einem Datenspeicher, die einen Betrieb des Sensors und des Messumformers betreffen;
c) Anhand der zuvor abgerufenen Informationen ermitteln, ob der Sensor und der Messumformer für einen zusammenwirkenden Betrieb ausgebildet sind;
d) Ausgabe des Ergebnisses der Ermittlung in Verfahrensschritt c) über eine grafische Anzeige.

Erfindungsgemäß werden die zuvor erläuterten Verfahrensschritte b) und c) von einem mobilen Datenverarbeitungsgerät, insbesondere einem Smartphone oder einem Tablet, durchgeführt. Das mobile Datenverarbeitungsgerät nimmt dabei Kontakt zu dem Datenspeicher auf, ruft die beschriebenen Informationen ab und führt die Prüfung auf Vereinbarkeit von Sensor und Messumformer durch. Speziell bei einem Austausch des Messumformers können die Betriebsdaten von Sensor und Messumformer (u.a. Betriebsstunden, Betriebszustände etc.) auf das mobile Datenverarbeitungsgerät übertragen werden, um nach dem Austausch des alten Messumformers durch einen neuen Messumformer die Betriebsdaten von Sensor und Messumformer wieder zurück auf den neuen Messumformer übertragen zu können.

Weiter erfindungsgemäß wird das Ermitteln der Identität von Sensor und Messumformer über eine optische Erfassung des Sensors und/oder Messumformers auch von dem mobilen Datenverarbeitungsgerät vorgenommen, insbesondere mittels einer in dem mobilen Datenverarbeitungsgerät enthaltenen Kamera.

Weiter erfindungsgemäß erfolgt der Verfahrensschritt d), also die grafische Ausgabe des Ergebnisses der zuvor vorgenommenen Prüfung auf Kompatibilität, ebenfalls von dem mobilen Datenverarbeitungsgerät. Die Ausgabe kann aber auch, alternativ oder zusätzlich, von einem separaten Anzeigegerät übernommen werden.

Der Messumformer ist dazu ausgebildet, eine zu überwachende Messgröße des Sensors (z.B. Temperatursensor, Drucksensor etc.) zu erfassen und ein mit dem aktuellen Wert der Messgrö-βe korreliertes elektrisches Messsignal zu erzeugen. Eine (eindeutige) Information zur Ermittlung der Identität des Sensors und des Messumformers kann beispielsweise eine Seriennummer sein, die der Hersteller des Sensors und des Messumformers (es muss nicht notwendigerweise ein einziger Hersteller für Sensor und Messumformer sein) jeweils vergeben haben, um eine eindeutige Identifikation zu ermöglichen.

Der Datenspeicher kann sich in der Nähe (beispielsweise innerhalb der technischen Anlage) befinden. Er kann aber auch an einem entfernten Ort befindlich sein (beispielsweise bei dem Hersteller des Sensors und/oder des Messumformers). In dem Datenspeicher sind Informationen hinterlegt, die einen Betrieb des Sensors und des Messumformers betreffen. Diese Informationen können bei der Fertigung des Sensors bzw. des Messumformers in dem Datenspeicher hinterlegt worden sein und betreffen spezifische Betriebsdaten für den Sensor bzw. den Messumformer. Es kann in diesem Zusammenhang auch von einem digitalen Zwilling des Sensors und des Messumformers sprechen, der in dem Datenspeicher hinterlegt ist.

Anhand der an den Datenspeicher übermittelten Identitäten von Sensor und Messumformer und der aus dem Datenspeicher abgerufenen Informationen, die den Betrieb des Sensors und des Messumformers betreffen, wird darauf hin ermittelt, ob Sensor und Messumformer zueinander passen, also für einen zusammenwirkenden Betrieb ausgebildet sind. Das Ergebnis dieser Prüfung wird grafisch darstellt, so dass beispielsweise ein Inbetriebnehmer des Sensors und des Messumformers auf einfache Art und Weise eine Rückmeldung bezüglich einer Vereinbarkeit / Kompatibilität von Sensor und Messumformer erhalten kann.

Bevorzugt werden im Fall eines positiven Ergebnisses der Sensor und der Messumformer miteinander verbunden, um einen zusammenwirkenden Betrieb des Sensors und des Messumformers zu ermöglichen.

Die Identität des Sensors und/oder des Messumformers kann dabei lösungsgemäß händisch erfasst werden (z.B. über das Ablesen einer Identifikationsnummer von dem Sensor und/oder dem Messumformer). Bevorzugt erfolgt das Erfassen der Identität des Sensors und/oder des Messumformers über eine optische Erfassung des Sensors und/oder des Messumformers, beispielsweise durch Erkennung eines QR-Codes oder durch ein Verfahren zur optischen Zeichenerkennung (engl. Optical Character Recognition, kurz: OCR).

Bei einer bevorzugten Weiterbildung der Erfindung werden nach der Verbindung des Sensors und des Messumformers zusätzlich folgende Schritte durchgeführt:
a) Aufbau einer Datenverbindung von dem mobilen Datenverarbeitungsgerät zu dem Sensor und/oder dem Messumformer;
b) Übertragen von Daten bezüglich einer Kalibrierung des Sensors und/oder des Messumformers von dem Sensor und/oder dem Messumformer zu dem mobilen Datenverarbeitungsgerät;
c) Übertragen der von dem Sensor und/oder dem Messumformer empfangenen Daten bezüglich einer Kalibrierung des Sensors und/oder des Messumformers in den Datenspeicher;
d) Ausgehend von den übertragenen Daten bezüglich einer Kalibrierung des Sensors und/oder des Messumformers wird ermittelt, ob der Sensor und der Messumformer weiterhin für einen zusammenwirkenden Betrieb ausgebildet sind oder ob neue Kalibrierungsdaten von dem Datenspeicher übertragen werden müssen;
e) Gegebenenfalls Übertragen der neuen Kalibrierungsdaten von dem Datenspeicher zu dem Sensor und/oder dem Messumformer durch das mobile Datenverarbeitungsgerät;
f) Grafische Ausgabe durch das mobile Datenverarbeitungsgerät, dass der Sensor und der Messumformer weiterhin miteinander verbindbar sind.

Durch diese Weiterbildung lässt sich eine Wartung und eine ggf. erforderliche Neukalibrierung von Sensor und Messumformer auf effiziente Weise durchführen.

Bevorzugt wird nach der Ermittlung gemäß Verfahrensschritt d) der zuvor erläuterten Weiterbildung des erfindungsgemäßen Verfahrens anhand der übertragenen Daten bezüglich einer Kalibrierung des Sensors und/oder des Messumformers und anhand von bereits zuvor auf dem Datenspeicher hinterlegten Kalibrierungsdaten bezüglich einer Kalibrierung des Sensors und/oder des Messumformers ein Kalibrierungsrhythmus für den Sensor und/oder den Messumformer ermittelt. Dabei können Methoden von selbstlernenden Systemen eingesetzt werden, um eine Prognose über notwendige Wartungen/Rekalibrierungen von Sensor und Messumformer weiter zu verfeinern.

Dabei können bei der der Ermittlung des Kalibrierungsrhythmus für den Sensor und/oder den Messumformer auch Umweltparameter miteinbezogen werden, die zuvor von dem Sensor und/oder dem Messumformer ermittelt worden sind.

Die zuvor formulierte Aufgabe wird zudem gelöst durch ein mobiles Datenverarbeitungsgerät, insbesondere ein Smartphone oder ein Tablet, das Mittel umfasst, die dazu ausgebildet sind, ein Verfahren wie zuvor erläutert auszuführen.

Zudem wird die Aufgabe gelöst durch ein Computerprogrammprodukt, umfassend Befehle, die bei der Ausführung des Computerprogramms durch einen Computer diesen veranlassen, ein Verfahren wie zuvor erläutert auszuführen.

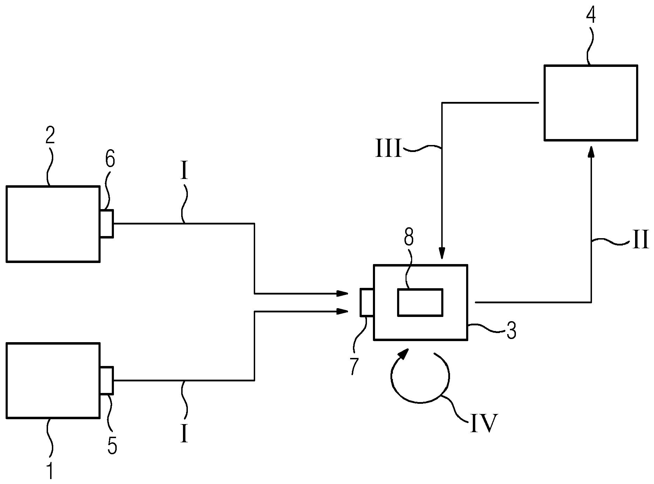

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur sind ein Sensor 1, ein Messumformer 2, ein mobiles Datenverarbeitungsgerät 3 und ein Datenspeicher 4 dargestellt. Der Sensor 1 weist einen QR-Code 5 als Identifikationsinformation auf. Auch der Messumformer 2 weist einen QR-Code 6 als Identifikationsinformation auf. Das mobile Daten verarbeitungsgerät 3 weist eine Kamera 7 zum Erkennen von optischen Informationen auf.

Im Folgenden wird exemplarisch der Ablauf eines erfindungsgemäßen Verfahrens erläutert. Der Sensor 1 und der Messumformer 2 sollen für den Einsatz in einer technischen Anlage miteinander in Verbindung gebracht werden. Hierzu erfasst ein Inbetriebnehmer der technischen Anlage in einem ersten Verfahrensschritt I mittels des mobilen Datenverarbeitungsgeräts 3 mittels der Kamera 7 die QR-Codes 5, 6 von Sensor 1 und Messumformer 2. Daran anschließend nimmt das mobile Datenverarbeitungsgerät 3 in einem zweiten Verfahrensschritt II Kontakt zu dem Datenspeicher 4 auf und übermittelt dem Datenspeicher 4 die zuvor erfassten Identitäten des Sensors 1 und des Messumformers 2.

Anhand der übermittelten Identitäten stellt der Datenspeicher 4 (genauer: eine den Datenspeicher kontrollierende Instanz) dem mobilen Datenverarbeitungsgerät 3 in einem dritten Verfahrensschritt III Informationen bereit, die einen Betrieb des Sensors 1 und des Messumformers 2 betreffen. Das mobile Datenverarbeitungsgerät 3 ermittelt auf Basis der zuvor abgerufenen Informationen in einem vierten Verfahrensschritt IV, ob der Sensor 1 und der Messumformer 2 für einen zusammenwirkenden Betrieb ausgebildet sind. Das Ergebnis dieser Prüfung wird über eine grafische Anzeige 8 des mobilen Datenverarbeitungsgerätes 3 grafisch dargestellt und kann insbesondere von dem Inbetriebnehmer erfasst werden. Der Sensor 1 und der Messumformer 2 können im Fall eines positiven Prüfungsergebnisses miteinander kombiniert (gepaart) werden.

Nach der Verbindung des Sensors 1 und des Messumformers 2 werden zusätzlich folgende Schritte durchgeführt: Es wird zunächst eine Datenverbindung von dem mobilen Datenverarbeitungsgerät 3 zu dem Sensor 1 und/oder dem Messumformer 2 aufgebaut. Daraufhin werden Daten bezüglich einer Kalibrierung des Sensors 1 und/oder des Messumformers 2 von dem Sensor 1 und/oder dem Messumformer 2 zu dem mobilen Datenverarbeitungsgerät 3 übertragen. Die zuvor von dem Sensor 1 und/oder dem Messumformer 2 empfangenen Daten bezüglich einer Kalibrierung des Sensors 1 und/oder des Messumformers 2 werden in den Datenspeicher 4 übertragen. Ausgehend von den übertragenen Daten bezüglich einer Kalibrierung des Sensors 1 und/oder des Messumformers 2 wird dann ermittelt, ob der Sensor 1 und der Messumformer 2 weiterhin für einen zusammenwirkenden Betrieb ausgebildet sind oder ob neue Kalibrierungsdaten von dem Datenspeicher 4 übertragen werden müssen.

Dabei wird zusätzlich anhand der übertragenen Daten bezüglich einer Kalibrierung des Sensors 1 und/oder des Messumformers 2 und anhand von bereits zuvor auf dem Datenspeicher 4 hinterlegten Kalibrierungsdaten bezüglich einer Kalibrierung des Sensors 1 und/oder des Messumformers 2 ein Kalibrierungsrhythmus für den Sensor 1 und/oder den Messumformer 2 ermittelt. Bei der Ermittlung des Kalibrierungsrhythmus für den Sensor 1 und/oder den Messumformer 2 werden dabei auch Umweltparameter miteinbezogen, die zuvor von dem Sensor 1 und/oder dem Messumformer 2 ermittelt worden sind.

Gegebenenfalls findet zuletzt eine Übertragung der neuen Kalibrierungsdaten von dem Datenspeicher 4 zu dem Sensor 1 und/oder dem Messumformer 2 durch das mobile Datenverarbeitungsgerät 3 statt. Zuletzt findet dann eine grafische Ausgabe durch die Anzeige 8 des mobile Datenverarbeitungsgeräts 3 statt, dahingehend, dass der Sensor 1 und der Messumformer 2 weiterhin miteinander verbindbar sind.

## Patentansprüche

1. Verfahren, umfassend:
a) Erfassen einer Identität eines Sensors (1) und eines Messumformers (2);
b) Anhand der zuvor erfassten Identitäten Abrufen von Informationen von einem Datenspeicher (4), die einen Betrieb des Sensors (1) und des Messumformers (2) betreffen;
c) Anhand der zuvor abgerufenen Informationen ermitteln, ob der Sensor (1) und der Messumformer (2) für einen zusammenwirkenden Betrieb ausgebildet sind;
d) Ausgabe des Ergebnisses der Ermittlung in Verfahrensschritt c) über eine grafische Anzeige (8);
wobei die Verfahrensschritte a), b), c) und d) von einem mobilen Datenverarbeitungsgerät (3) durchgeführt werden.

2. Verfahren nach Anspruch 1, bei dem im Fall eines positiven Ergebnisses im Verfahrensschritt c) gemäß Anspruch 1 der Sensor (1) und der Messumformer (2) miteinander verbunden werden, um einen zusammenwirkenden Betrieb des Sensors (1) und des Messumformers (2) zu ermöglichen.

3. Verfahren nach Anspruch 1 oder 2, bei dem das Erfassen der Identität des Sensors (1) und/oder des Messumformers (2) über eine optische Erfassung des Sensors (1) und/oder des Messumformers (2) erfolgt.

4. Verfahren nach einem der Ansprüche 1 bis 3, bei dem das mobile Datenverarbeitungsgerät (3) als ein Smartphone oder als ein Tablet ausgebildet ist.

5. Verfahren nach Anspruch 2 oder 4, bei dem nach der Verbindung des Sensors (1) und des Messumformers (2) zusätzlich folgende Schritte durchgeführt werden:
a) Aufbau einer Datenverbindung von dem mobilen Datenverarbeitungsgerät (3) zu dem Sensor (1) und/oder dem Messumformer (2);
b) Übertragen von Daten bezüglich einer Kalibrierung des Sensors 1 und/oder des Messumformers (2) von dem Sensor (1) und/oder dem Messumformer (2) zu dem mobilen Datenverarbeitungsgerät (3);
c) Übertragen der von dem Sensor (1) und/oder dem Messumformer (2) empfangenen Daten bezüglich einer Kalibrierung des Sensors (1) und/oder des Messumformers (2) in den Datenspeicher (4);
d) Ausgehend von den übertragenen Daten bezüglich einer Kalibrierung des Sensors (1) und/oder des Messumformers (2) wird ermittelt, ob der Sensor (1) und der Messumformer (2) weiterhin für einen zusammenwirkenden Betrieb ausgebildet sind oder ob neue Kalibrierungsdaten von dem Datenspeicher (4) übertragen werden müssen;
e) Gegebenenfalls Übertragen der neuen Kalibrierungsdaten von dem Datenspeicher (4) zu dem Sensor (1) und/oder dem Messumformer (2) durch das mobile Datenverarbeitungsgerät (3) ;
f) Grafische Ausgabe durch das mobile Datenverarbeitungsgerät (3), dass der Sensor (1) und der Messumformer (2) weiterhin miteinander verbindbar sind.

6. Verfahren nach Anspruch 5, bei dem nach der Ermittlung gemäß Verfahrensschritt d) anhand der übertragenen Daten bezüglich einer Kalibrierung des Sensors (1) und/oder des Messumformers (2) und anhand von bereits zuvor auf dem Datenspeicher hinterlegten Kalibrierungsdaten bezüglich einer Kalibrierung des Sensors (1) und/oder des Messumformers (2) ein Kalibrierungsrhythmus für den Sensor (1) und/oder den Messumformer (2) ermittelt wird.

7. Verfahren nach Anspruch 6, bei dem bei der Ermittlung des Kalibrierungsrhythmus für den Sensor (1) und/oder den Messumformer (2) auch Umweltparameter miteinbezogen werden, die zuvor von dem Sensor (1) und/oder dem Messumformer (2) ermittelt worden sind.

8. Mobiles Datenverarbeitungsgerät (3) das Mittel umfasst, die dazu ausgebildet sind, das Verfahren gemäß einem der Ansprüche 1 bis 7 auszuführen.

9. Computerprogrammprodukt, umfassend Befehle, die bei der Ausführung des Computerprogramms durch einen Computer diesen veranlassen, das Verfahren gemäß einem der Ansprüche 1 bis 7 auszuführen.

## Claims

1. Method, comprising:
a) detecting an identity of a sensor (1) and a measuring transducer (2);
b) retrieving information from a data storage device (4) with reference to the previously detected identities and said information relates to an operation of the sensor (1) and the measuring transducer (2);
c) determining with reference to the previously retrieved information whether the sensor (1) and the measuring transducer (2) are embodied for a cooperative operation;
d) outputting the result of the determination in method step c) via a graphic display (8);
wherein the method steps a), b), c) and d) are carried out by a mobile data processing device (3).

2. Method according to claim 1, in which in the case of a positive result in the method step c) in accordance with claim 1 the sensor (1) and the measuring transducer (2) are connected to one another in order to render possible a cooperative operation of the sensor (1) and the measuring transducer (2).

3. Method according to claim 1 or 2, in which the identity of the sensor (1) and/or the measuring transducer (2) is detected via an optical detection of the sensor (1) and/or the measuring transducer (2).

4. Method according to one of claims 1 to 3, in which the mobile data processing device (3) is embodied as a smartphone or as a tablet.

5. Method according to claim 2 or 4, in which after the connection of the sensor (1) and the measuring transducer (2) the following steps are additionally performed:
a) building a data connection from the mobile data processing device (3) to the sensor (1) and/or the measuring transducer (2);
b) transmitting data in relation to a calibration of the sensor 1 and/or the measuring transducer (2) from the sensor (1) and/or the measuring transducer (2) to the mobile data processing device (3);
c) transmitting the data, which is received by the sensor (1) and/or the measuring transducer (2), in relation to a calibration of the sensor (1) and/or the measuring transducer (2) into the data storage device (4);
d) determining based on the transmitted data in relation to a calibration of the sensor (1) and/or the measuring transducer (2) whether the sensor (1) and the measuring transducer (2) are furthermore embodied for a cooperative operation or whether new calibration data must be transmitted from the data storage device (4);
e) transmitting where applicable the new calibration data from the data storage device (4) to the sensor (1) and/or the measuring transducer (2) by the mobile data processing device (3) ;
f) graphically outputting by the mobile data processing device (3) that the sensor (1) and the measuring transducer (2) can furthermore be connected to one another.

6. Method according to claim 5, in which after the determination in accordance with method step d) a calibration rhythm is determined for the sensor (1) and/or the measuring transducer (2) with reference to the transmitted data in relation to a calibration of the sensor (1) and/or the measuring transducer (2) and with reference to calibration data, which is already previously stored on the data storage device, in relation to a calibration of the sensor (1) and/or the measuring transducer (2).

7. Method according to claim 6, in which environmental parameters that have previously been determined by the sensor (1) and/or the measuring transducer (2) are also incorporated in the case of the determination of the calibration rhythm for the sensor (1) and/or the measuring transducer (2).

8. Mobile data processing device (3) which comprises means which are embodied to execute the method according to one of claims 1 to 7.

9. Computer program product, comprising commands, which when the computer program is executed by a computer, trigger this computer to implement the method according to one of claims 1 to 7.

## Revendications

1. Procédé comprenant :
a) La détection d'une identité d'un capteur (1) et d'un transducteur (2) de mesure ;
(b) A l'aide de l'identité détectée auparavant, appel d'informations dans une mémoire (4) de données, qui concernent un fonctionnement du capteur (1) et du transducteur (2) de mesure ;
c) A l'aide des informations appelées auparavant, détermination du point de savoir si le capteur (1) et le transducteur (2) de mesure sont constitués pour un fonctionnement en coopération ;
d) Émission du résultat de la détermination du stade c) du procédé sur un affichage (8) graphique ;
dans lequel on effectue les stades a), b), c) et d) du procédé par un appareil (3) mobile de traitement des données.

2. Procédé suivant la revendication 1, dans lequel dans le cas d'un résultat affirmatif dans le stade c) du procédé suivant la revendication 1, on relie entre eux le capteur (1) et le transducteur (2) de mesure pour rendre possible un fonctionnement en coopération du capteur (1) et du transducteur (2) de mesure.

3. Procédé suivant la revendication 1 ou 2, dans lequel la détection de l'identité du capteur (1) et/ou du transducteur (2) de mesure s'effectue par une détection optique du capteur (1) et/ou du transducteur (2) de mesure.

4. Procédé suivant l'une des revendications 1 à 3, dans lequel l'appareil (3) mobile de traitement de données est constitué sous la forme d'un téléphone intelligent et/ou d'une tablette.

5. Procédé suivant la revendication 2 ou 4, dans lequel après la liaison du capteur (1) et du transducteur (2) de mesure, on effectue en outre les stades suivants :
a) Établissement d'une liaison de données de l'appareil (3) mobile de traitement de données au capteur (1) et/ou au transducteur (2) de mesure ;
b) Transmission de données en ce qui concerne un étalonnage du capteur (1) et/ou du transducteur (2) de mesure du capteur (1) et/ou du transducteur (2) de mesure à l'appareil (3) mobile de traitement de données ;
c) Transmission des données reçues par le capteur (1) et/ou par le transducteur (2) de mesure en ce qui concerne un étalonnage du capteur (1) et/ou du transducteur (2) de mesure à la mémoire (4) de données ;
d) À partir des données transmises en ce qui concerne un étalonnage du capteur (1) et/ou du transducteur (2) de mesure, on détermine si le capteur (1) et le transducteur (2) de mesure continuent à être constitués pour un fonctionnement en coopération ou s'il faut transmettre des données d'étalonnage nouvelles par la mémoire (4) de données ;
e) Le cas échéant, transmission des données nouvelles d'étalonnage de la mémoire (4) de données au capteur (1) et/ou au transducteur (2) de mesure par l'appareil (3) mobile de traitement de données ;
f) Émission graphique par l'appareil (3) mobile de traitement de données que le capteur (1) et le transducteur (2) de mesure peuvent continuer à être reliés l'un à l'autre.

6. Procédé suivant la revendication 5, dans lequel, après la détermination suivant le stade d) du procédé, à l'aide des données transmises en ce qui concerne un étalonnage du capteur (1) et/ou du transducteur (2) de mesure et à l'aide de données d'étalonnage mises en mémoire déjà auparavant dans la mémoire de données en ce qui concerne un étalonnage du capteur (1) et/ou du transducteur (2) de mesure, on détermine un rythme d'étalonnage du capteur (1) et/ou du transducteur (2) de mesure.

7. Procédé suivant la revendication 6, dans lequel à la détermination du rythme d'étalonnage du capteur (1) et/ou du transducteur (2) de mesure, on incorpore également des paramètres d'environnement, qui ont été déterminés auparavant par le capteur (1) et/ou le transducteur (2) de mesure.

8. Appareil (3) mobile de contenance de données, qui comprend des moyens qui sont constitués pour effectuer le procédé suivant l'une des revendications 1 à 7.

9. Produit de programme d'ordinateur comprenant des instructions, qui, lors de la réalisation du programme d'ordinateur par un ordinateur, font que celui-ci effectue un procédé suivant l'une des revendications 1 à 7.
